# EUROPÄISCHE PATENTSCHRIFT

(11) **EP 1 469 326 B1**
(45) Veröffentlichungstag und Bekanntmachung des Hinweises auf die Patenterteilung: **20.12.2006**
(21) Anmeldenummer: 03100831.1
(22) Anmeldetag: 28.03.2003
(51) Int. Cl.: G02B 5/20, G02B 7/00, G03B 42/08

(54) **Vorrichtung zum Erfassen von in einer Phosphorschicht enthaltenen Bildinformationen**
Device for reading image information from a phosphor layer
Dispositif pour la lecture d'information d'image à partir d'une couche de phosphore

(43) Veröffentlichungstag der Anmeldung: 20.10.2004
(73) Patentinhaber: Agfa-Gevaert HealthCare GmbH, 51373 Leverkusen (DE)
(72) Erfinder: Reiser, Dr. Georg, 80337, München (DE); Thoma, Dr. Ralph, 86167, Augsburg (DE); Lind, Martin, 80809, München (DE); Schulz, Christian, , Hyogo 669-1324 (JP)

(56) Entgegenhaltungen:
- EP-A- 0 702 483
- US-A- 4 258 264
- US-A- 4 369 367
- DRISCOLL, WALTER G.: "Handbook of Optics" 1978 , MCGRAW-HILL , NEW YORK XP002250125 047710 * Seite 8-10 - Seite 8-11 * * Seite 8-38 *
- PATENT ABSTRACTS OF JAPAN vol. 2000, no. 11, 3. Januar 2001 (2001-01-03) & JP 2000 235108 A (OLYMPUS OPTICAL CO LTD), 29. August 2000 (2000-08-29)
- PATENT ABSTRACTS OF JAPAN vol. 2002, no. 03, 3. April 2002 (2002-04-03) & JP 2001 324615 A (MATSUSHITA ELECTRIC IND CO LTD), 22. November 2001 (2001-11-22)

## Beschreibung

Die Erfindung betrifft eine Vorrichtung zum Erfassen von in einer Phosphorschicht enthaltenen Informationen gemäß dem Oberbegriff des Anspruchs 1.

Röntgenaufnahmen werden, insbesondere für medizinische Zwecke, unter Verwendung von Phosphorschichten aufgezeichnet, wobei die durch ein Objekt, beispielsweise einen Patienten, hindurchtretende Röntgenstrahlung als latentes Bild in der Phosphorschicht gespeichert wird. Zum Auslesen des latenten Bildes wird die Phosphorschicht mit Anregungslicht bestrahlt, wodurch diese entsprechend dem latenten Bild Emissionslicht aussendet, welches von einem optischen Detektor erfasst und in elektrische Signale umgewandelt wird. Die elektrischen Signale können nach Bedarf weiterverarbeitet und auf einem Monitor dargestellt oder an einem entsprechenden Ausgabegerät, wie z. B. einem Drucker, ausgegeben werden.

Die deutsche Patentschrift DE 198 59 747 C1 offenbart eine solche Vorrichtung, bei welcher zwischen Phosphorschicht und Detektor Reflexionsschichten zur Reflexion und gegebenenfalls zusätzlich ein Absorptionsfilter zur Absorption des Anregungslichts vorgesehen sind. Hierdurch wird verhindert, dass das Anregungslicht zum Detektor gelangen und dadurch die Erfassung des von der Phosphorschicht ausgehenden Emissionslichts verfälschen kann. Darüber hinaus kann die Lichtquelle mit einer Reflexionsschicht zur Reflexion von nicht zur Anregung von Emissionslicht vorgesehenen oder geeigneten Lichtanteilen versehen sein. Hierdurch wird vermieden, dass solche Lichtanteile auf die Phosphorschicht oder andere Komponenten der Vorrichtung treffen und durch Reflexion und/oder Streuung zum Detektor gelangen können, was ebenfalls die Erfassung des Emissionslichts verfälschen würde.

Diese Vorrichtung erlaubt im Allgemeinen eine Erfassung des Emissionslichts mit hoher Zuverlässigkeit. In bestimmten Anwendungsfällen, beispielsweise bei Verwendung von bestimmten Detektor- und/oder Lichtquellentypen und/oder bestimmten Arten von Phosphorschichten, kann jedoch das bei der jeweiligen Anwendung erforderliche Maß an Zuverlässigkeit nicht immer gewährleistet werden.

Absorptionsfilter mit unterschiedlichem spektralen Absorptionsverhalten weisen im Allgemeinen unterschiedliche thermische Ausdehnungskoeffizienten auf. In solchen Fällen würde eine Verbindung von zwei oder mehreren unterschiedlichen Filterelementen dazu führen, dass sich die ganze Filtereinrichtung aufgrund der unterschiedlichen thermischen Ausdehnung der Filterelemente bei Temperaturschwankungen verbiegen würde. Dieser bei Bimetallen ausgenutzte Effekt würde bei den hier vorliegenden optischen Anwendungen zu unerwünschten Effekten führen, wie z.B. einem veränderten Absorptionsverhalten aufgrund von Spannungen in den Filterelementen, erhöhten Reflexionsverlusten an den Oberflächen der Filterelemente und Verspannungen in den mit der Filtereinrichtung verbundenen Komponenten der Vorrichtung. Letzteres ist insbesondere bei einer mit einem Detektor verbundenen Filtereinrichtung von Nachteil, da bei einer Verbiegung der Filtereinrichtung entweder der Detektor ebenfalls verbogen wird oder dieser zumindest hohen Spannungen ausgesetzt ist, was dessen Empfindlichkeit und folglich die Zuverlässigkeit beim Erfassen des Emissionslichts herabsetzen kann.

Es ist Aufgabe der vorliegenden Erfindung, eine Vorrichtung zum Erfassen von in einer Phosphorschicht enthaltenen Informationen anzugeben, bei welcher eine möglichst hohe Zuverlässigkeit bei der Erfassung des Emissionslichts gewährleistet ist.

Diese Aufgabe wird gemäß Anspruch 1 dadurch gelöst, dass die Filtereinrichtung, welche zwischen Phosphorschicht und Detektor oder zwischen Phosphorschicht und Lichtquelle angeordnet ist, mindestens drei als Absorptionsfilter ausgebildete und miteinander verbundene Filterelemente aufweist, wobei mindestens zwei der miteinander verbundenen Filterelemente unterschiedliche thermische Ausdehnungskoeffizienten aufweisen und die Filterelemente derart hintereinander angeordnet sind, dass die Abfolge der thermischen Ausdehnungs Koeffizienten der Filterelemente symmetrisch ist, und wobei die miteinander verbundenen Filterelemente derart angeordnet sind, dass mindestens zwei Filterelement-Paare aus jeweils zwei Filterelementen mit unterschiedlichen thermischen Ausdehnungskoeffizienten erhalten werden und Biegekräfte, welche bei Temperaturänderungen in den einzelnen Filterelement-Paaren auftreten, gegeneinander wirken und sich insbesondere gegenseitig aufheben. Hierdurch wird eine Verbiegung der Filtereinrichtung aufgrund von Temperaturschwankungen reduziert oder verhindert.

Bei Absorptionsfiltern im Sinne der Erfindung handelt es sich um optische Filter, vorzugsweise aus Glas oder Kunststoff, die lichtabsorbierende Substanzen aufweisen. Als lichtabsorbierende Substanzen finden vorzugsweise ionische und/oder anorganische Substanzen Verwendung.

Durch die erfindungsgemäße Kombination von zwei oder mehreren als Absorptionsfilter, vorzugsweise mit jeweils unterschiedlichem spektralen Absorptionsverhalten, ausgebildeten Filterelementen werden - verglichen mit einem einzelnen Absorptionsfilter oder mit einer Kombination aus einzelnen Reflexionsfiltern - folgende Vorteile erzielt:
- Bei detektorseitiger Anordnung der Filtereinrichtung zwischen Phosphorschicht und Detektor wird ein größerer Unterschied in der Durchlässigkeit für das Emissionslicht im Verhältnis zum Anregungslicht erhalten. Damit ist gewährleistet, dass ein großer Anteil des Emissionslichts den Detektor erreicht, während das Anregungslicht im Wesentlichen herausgefiltert wird.
- Bei Anordnung der Filtereinrichtung zwischen Lichtquelle und Phosphorschicht wird in entsprechender Weise ein größerer Unterschied in der Durchlässigkeit für das Anregungslicht im Verhältnis zu nicht zur Anregung von Emissionslicht in der Phosphorschicht vorgesehenen oder geeigneten Lichtanteilen erzielt. Hierdurch wird erreicht, dass ein großer Anteil des Anregungslichts auf die Phosphorschicht trifft und die übrigen Lichtanteile im Wesentlichen herausgefiltert werden.

Bei beiden Anordnungen der erfindungsgemäßen Filtereinrichtung wird insgesamt eine höhere Zuverlässigkeit bei der Erfassung des Emissionslichts gewährleistet. Selbstverständlich wird eine besonders hohe Zuverlässigkeit dann erreicht, wenn beide Anordnungen kombiniert werden, d.h. sowohl zwischen Lichtquelle und Phosphorschicht als auch zwischen Phosphorschicht und Detektor jeweils eine entsprechend ausgestaltete Filtereinrichtung angeordnet ist.

Durch die erfindungsgemäße Verbindung der einzelnen Filterelemente zu einer Filtereinrichtung, welche im Strahlengang zwischen Phosphorschicht und Detektor bzw. im Strahlengang zwischen Phosphorschicht und Lichtquelle angeordnet ist, wird darüber hinaus ein einfacherer und kompakterer Aufbau der Vorrichtung erhalten als bei einzelnen separaten Reflexionsschichten und gegebenenfalls einer zusätzlichen separaten Absorptionsschicht in den Strahlengängen.

Die Filterelemente sind vorzugsweise durch Kleben miteinander verbunden. Dies erfolgt insbesondere mittels einer zwischen den einzelnen Filterelementen liegenden Schicht aus Klebstoff oder Kitt mit einer hohen Durchlässigkeit im Wellenlängenbereich des Emissionslichts. Alternativ kann die Klebeschicht nur in Teilbereichen der Filterelemente ausgebildet sein. Bei detektorseitiger Anordnung der Filtereinrichtung kann darüber hinaus das Material der Schicht eine niedrige Durchlässigkeit für Licht im Wellenlängenbereich des Anregungslichts aufweisen, wodurch eine zusätzliche Schwächung unerwünschter Lichtanteile erreicht werden kann. Durch die Schicht aus Klebstoff bzw. Kitt werden - im Vergleich zu einer dazwischen liegenden Schicht aus Luft- Reflexionsverluste aufgrund geringerer Unterschiede der Brechungsindizes an den Grenzflächen der Filterelemente vermindert, so daß eine hohe Durchlässigkeit im Wellenlängenbereich des Emissionslichts gewährleistet ist.

Alternativ können die Filter mittels Ansprengen miteinander verbunden werden, wobei die Oberflächen der Filterelemente ausreichend glatt poliert sind, so dass diese bei Kontakt miteinander aufgrund atomarer oder molekularer Kohäsionskräfte zusammen gehalten werden. Bei dieser einfachen Verbindungstechnik wird das gesamte Transmissionsverhalten der Filtereinrichtung nicht durch zusätzliche Kitt-oder Kleberschichten beeinflusst.

Die Filterelemente können alternativ oder zusätzlich auch mittels einer mechanischen Halteeinrichtung zusammengehalten werden. Durch eine mechanische Verbindung der Filterelemente wird allgemein ein kompakter und robuster Aufbau erreicht. Die Halteeinrichtung ist vorzugsweise als ein im Randbereich der Filterelemente verlaufender, gegebenenfalls unterbrochener Rahmen ausgebildet. Hierdurch ist ein mechanischer Zusammenhalt auf einfache Weise realisierbar.

Bei einer weiteren bevorzugten Ausgestaltung der Erfindung ist vorgesehen, daß die Filtereinrichtung am Detektor angebracht ist, um einen möglichst kompakten Aufbau der Vorrichtung zu erhalten. Die Filtereinrichtung kann, analog zu den im Zusammenhang mit den Filterelementen genannten Verbindungstechniken, durch Kleben oder durch eine mechanische Halteeinrichtung, wie z. B. einen Rahmen, mit dem Detektor verbunden sein.

Vorzugsweise sind die Filterelemente derart hintereinander angeordnet, daß die Abfolge der Dicken der Filterelemente symmetrisch ist. Es kann vorgesehen sein, dass zwischen mindestens zwei ersten Filterelementen mit jeweils einem ersten thermischen Ausdehnungskoeffizienten mindestens ein zweites Filterelement mit einem zweiten thermischen Ausdehnungskoeffizienten angeordnet ist. Die Dicken der ersten Filterelemente liegen vorzugsweise in derselben Größenordnung und sind insbesondere gleich. Alternativ oder zusätzlich liegen auch die Dicken der zweiten Filterelemente in derselben Größenordnung und sind insbesondere gleich. Jede einzelne dieser Maßnahmen trägt zur verbesserten Verminderung bzw. Kompensation etwaiger Biegekräfte bei. Eine Kombination einzelner Maßnahmen führt zu einer entsprechend zuverlässigeren Verminderung bzw. Kompensation von Biegekräften.

Die als Absorptionsfilter ausgebildeten Filterelemente der Filtereinrichtung sind derart ausgestaltet, daß eine zwischen Phosphorschicht und Detektor angeordnete Filtereinrichtung in einem ersten Wellenlängenbereich des Emissionslichts durchlässig und in einem zweiten Wellenlängenbereich des Anregungslichts undurchlässig ist. Hierdurch wird eine Verfälschung des zu detektierenden Emissionslichts verhindert. Eine zwischen Phosphorschicht und Detektor angeordnete Filtereinrichtung kann zusätzlich oder alternativ in einem dritten Wellenlängenbereich undurchlässig sein, welcher bei größeren Wellenlängen liegt als der zweite Wellenlängenbereich des Anregungslichts. Damit ist die Filtereinrichtung nicht nur im Wellenlängenbereich des Anregungslichts, sondern zusätzlich in einem Bereich oberhalb des Wellenlängenbereichs des Anregungslichts undurchlässig. Dadurch wird das Verhältnis des durch die Filtereinrichtung transmittierten Emissionslichts zu Lichtanteilen im Wellenlängenbereich und oberhalb des Wellenlängenbereichs des Anregungslichts - und damit der Kontrast - erhöht.

Eine zwischen Phosphorschicht und Lichtquelle angeordnete Filtereinrichtung dagegen ist für Licht im zweiten Wellenlängenbereich des Anregungslichts durchlässig und für Licht in einem dritten Wellenlängenbereich von nicht zur Anregung von Emissionslicht vorgesehenen oder geeigneten Lichtanteilen im Wesentlichen undurchlässig.

Im Sinne der Erfindung ist die Filtereinrichtung bei einer Wellenlänge undurchlässig bzw. durchlässig, wenn sie bei dieser Wellenlänge einen Transmissionsgrad von unter 10⁻³, insbesondere unter 10⁻⁴, bzw. einen Transmissionsgrad von über 0,1, insbesondere über 0,7, aufweist.

In einer bevorzugten Weiterbildung der Erfindung ist vorgesehen, dass mindestens ein erstes der Filterelemente im ersten Wellenlängenbereich des Emissionslichts durchlässig und im zweiten Wellenlängenbereich des Anregungslichts undurchlässig ist und mindestens ein zweites der Filterelemente im ersten Wellenlängenbereich des Emissionslichts durchlässig und im dritten Wellenlängenbereich, welcher bei größeren Wellenlängen liegt als der zweite Wellenlängenbereich des Anregungslichts, undurchlässig ist. Durch die Kombination unterschiedlicher Filterelemente mit derartigen Filtercharakteristiken wird erreicht, daß der Kontrast im Vergleich zu einem einzelnen Filterelement, welches herstellungsbedingt meist in nur einem relativ schmalen Wellenlängenbereich undurchlässig ist, weiter erhöht wird.

Bei einer Ausgestaltung der Erfindung ist vorgesehen, dass mindestens eines der Filterelemente eine erste Reflexionsschicht aufweist, welche für Licht in einem vierten Wellenlängenbereich undurchlässig ist, welcher bei größeren Wellenlängen liegt als der zweite Wellenlängenbereich und welcher insbesondere mit dem zweiten Wellenlängenbereich teilweise überlappt. Alternativ oder zusätzlich weist mindestens eines der Filterelemente eine zweite Reflexionsschicht auf, welche für Licht in einem fünften Wellenlängenbereich undurchlässig ist, welcher bei größeren Wellenlängen liegt als der zweite Wellenlängenbereich und welcher insbesondere mit dem dritten Wellenlängenbereich und/oder vierten Wellenlängenbereich teilweise überlappt. Durch eine oder mehrere erste und/oder zweite Reflexionsschichten wird die Durchlässigkeit der Filtereinrichtung in wenigstens einem weiteren Wellenlängenbereich, welcher vorzugsweise zwischen dem zweiten und dritten Wellenlängenbereich liegt, herabgesetzt, was insgesamt zu einer weiteren Kontrasterhöhung führt.

Es ist bevorzugt, daß der dritte Wellenlängenbereich mit dem zweiten Wellenlängenbereich überlappt oder an den zweiten Wellenlängenbereich unmittelbar angrenzt. Die Filtereinrichtung ist dann für Licht in einem sehr breiten Wellenlängenbereich, der sich aus dem zweiten und dem daran angrenzenden dritten Wellenlängenbereich zusammensetzt, undurchlässig. Dies ist in Anwendungsfällen von besonderem Vorteil, bei denen in der Phosphorschicht längerwellige Fluoreszenzstrahlung angeregt wird, welche die Erfassung des bei niedrigeren Wellenlängen emittierten Emissionslichts beeinflussen würde. Ein Angrenzen des dritten Wellenlängenbereich an den zweiten wird vorzugsweise durch eine geeignete Wahl und Kombination von ersten und zweiten Filterelementen, insbesondere Absorptionsfiltern mit unterschiedlichem Transmissionsverhalten, erreicht. Falls dieses alleine durch Kombination von Filterelementen nicht erreicht werden kann, wird die Filtereinrichtung zusätzlich mit einer oder mehreren der oben beschriebenen ersten und/oder zweiten Reflexionsschichten versehen.

Die Erfindung wird nachfolgend an Hand von Figuren näher erläutert.

Es zeigen:
- Fig. 1: ein Ausführungsbeispiel der erfindungsgemäßen Vorrichtung;
- Fig. 2: Beispiele für den spektralen Transmissionsgrad der Filtereinrichtung sowie einzelner Filterelemente und Reflexionsschichten;
- Fig. 3 a-d: Nicht erfindungsgemäße Vergleichsbeispiele einer aus zwei Filterelementen zusammengesetzten Filtereinrichtung;
- Fig. 4 a-c: Ausführungsbeispiele einer aus drei Filterelementen zusammengesetzten Filtereinrichtung; und
- Fig. 5 a-f: Ausführungsbeispiele von aus drei bis fünf Filterelementen zusammengesetzten Filtereinrichtungen.

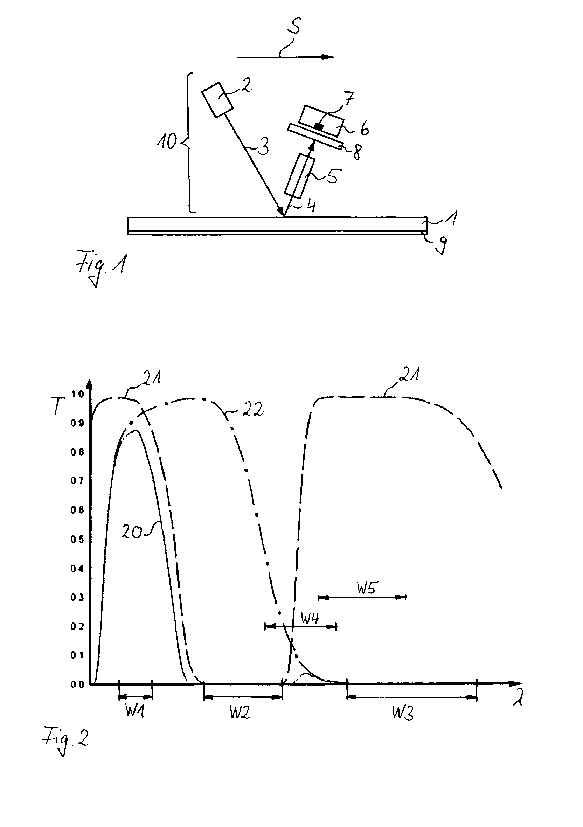

Fig. 1 zeigt ein Ausführungsbeispiel der erfindungsgemäßen Vorrichtung. Das in einer Phosphorschicht 1 gespeicherte latente Röntgenbild wird mittels eines Scankopfes 10 erfaßt, welcher in Scanrichtung S über die Phosphorschicht 1 bewegt wird. In weiteren Ausgestaltungen kann zusätzlich oder alternativ zum Scankopf 10 auch die Phosphorschicht 1 bewegt werden, wodurch ebenfalls unterschiedliche Bereiche der Phosphorschicht 1 erfaßt werden können. Zur mechanischen Stabilisierung der Phosphorschicht 1 ist diese auf eine Trägerschicht 9 aufgebracht.

Von einer Lichtquelle 2 ausgehendes Anregungslicht 3 trifft auf die Phosphorschicht 1 und regt auf und/oder in der Phosphorschicht 1 Emissionslicht 4 an, welches mittels einer lichtleitenden oder fokussierenden Optik 5 zu einem Detektor 6 geleitet bzw. auf den Detektor 6 fokussiert wird.

Zwischen der Phosphorschicht 1 und dem Detektor 6 ist eine Filtereinrichtung 8 angeordnet, welche in einem ersten Wellenlängenbereich des Emissionslichts 4 eine hohe Durchlässigkeit aufweist und in einem zweiten Wellenlängenbereich des Anregungslichts 3 im Wesentlichen undurchlässig ist, d. h. eine nur sehr niedrige Durchlässigkeit für Anregungslicht 3 aufweist. Die Filtereinrichtung 8 ist so ausgestaltet, dass sie zusätzlich in mindestens einem weiteren Wellenlängenbereich, welcher bei größeren Wellenlängen liegt als der zweite Wellenlängenbereich des Anregungslichts 3, undurchlässig ist. Die Filtereinrichtung 8 ist vorzugsweise am Detektor 6 angebracht, um einen möglichst kompakten Aufbau zu erhalten.

Durch die derart ausgestaltete Filtereinrichtung 8 wird erreicht, dass weder an der Phosphorschicht 1 und/oder Trägerschicht 9 reflektiertes Anregungslicht 3, noch Licht im dritten Wellenlängenbereich oberhalb des Wellenlängenbereichs des Anregungslichts zum Detektor 6 gelangen kann.

Lichtanteile im dritten Wellenlängenbereich rühren beispielsweise von längerwelligen Anteilen im Strahlungsspektrum der Lichtquelle 2 her, welche für die Anregung von Emissionslicht 4 in der Phosphorschicht 1 nicht vorgesehen oder nicht geeignet sind. Darüber hinaus können solche Lichtanteile bei bestimmten Arten von Phosphorschichten auftreten, bei denen durch das Anregungslicht 3 - neben dem zu erfassenden Emissionslicht 4 bei kleineren Wellenlängen als das Anregungslicht - zusätzlich Fluoreszenzlicht bei größeren Wellenlängen als das Anregungslicht 3 anregt wird. Solche längerwelligen Fluoreszenzlichtanteile sind jedoch unerwünscht, da sie im Allgemeinen keine Bildinformation beinhalten und zu einer Verfälschung der zu erfassenden Bildinformation führen.

Durch die entsprechend ausgestaltete Filtereinrichtung 8 wird im Wesentlichen nur noch das von der Phosphorschicht 1 ausgehende Emissionslicht 4 im ersten Wellenlängenbereich erfasst, so daß eine hohe Zuverlässigkeit und Genauigkeit bei der Erfassung des Emissionslichts 4 gewährleistet ist.

Die Lichtquelle 2 weist vorzugsweise Laserdioden auf, welche entlang einer senkrecht zur Figurenebene verlaufenden Zeile in der Weise angeordnet sind, dass sich die von den einzelnen Laserdioden ausgehenden divergenten Lichtstrahlenbündel überlagern und auf der Phosphorschicht 1 einen linien- oder streifenförmigen Bereich parallel zur Richtung der Zeile beleuchten. Optional kann zur Fokussierung des Anregungslichts 3 eine in Richtung der Zeile verlaufende Zylinderlinse vorgesehen sein, welche einerseits eine Fokussierung des Anregungslichts 3 auf die Phosphorschicht 1 bewirkt und andererseits eine Überlagerung der Einzelstrahlen benachbarter Laserdioden in Zeilenrichtung ermöglicht. Auf diese Weise wird auf der Phosphorschicht 1 eine nur schmale Linie mit in Zeilenrichtung im Wesentlichen konstanter Intensität beleuchtet. Anstelle von Laserdioden kann die Lichtquelle 2 auch andere Leuchtmittel, insbesondere intensitätsstarke Leuchtdioden (LEDs), in zeilenförmiger Anordnung aufweisen.

Der Detektor 6 umfasst lichtempfindliche Elemente 7, vorzugsweise ein oder mehrere lineare CCD-Arrays, welche in einer senkrecht zur Figurenebene verlaufenenden Zeile angeordnet sind. Alternativ können als lichtempfindliche Elemente 7 auch Fotodiodenzeilen verwendet werden.

In dem hier dargestellten Ausführungsbeispiel sind sowohl die Lichtquelle 2 als auch der Detektor 6 auf einer Seite der Phosphorschicht 1 angeordnet. In Anwendungsfällen, in denen die Trägerschicht 9 transparent ist, kann die Lichtquelle 2 auch im Bereich einer Seite der Phosphorschicht 1 und der Detektor 6 im Bereich der gegenüberliegenden Seite der Phosphorschicht 1 angeordnet sein. Bei dieser Ausführungsform kann die Filtereinrichtung 8 entweder zwischen Phosphorschicht 1 und Detektor 6 angeordnet oder aber an der transparenten Trägerschicht 9 angebracht oder in diese integriert sein.

In einer alternativen Ausgestaltung der Erfindung kann die Vorrichtung als sogenanntes Flying Spot-System ausgebildet sein. Die Lichtquelle 2 umfaßt bei dieser Ausgestaltung einen Laser und einen rotierenden Polygonspiegel, an welchem der Laserstrahl 3 des Lasers zur Phosphorschicht 1 hin reflektiert wird. Infolge der Rotation des Polygonspiegels überstreicht der Laserstrahl 3 dabei unterschiedliche Stellen auf der Phosphorschicht 1, die aufeinanderfolgend jeweils zur Emission von Lumineszenzlicht angeregt werden. Das von den angeregten Stellen auf der Phosphorschicht ausgehende Emissionslicht wird von einem Detektor 6 e r-faßt. Der Detektor 6 kann für eine ortsaufgelöste oder eine nicht ortsaufgelöste Erfassung ausgelegt sein. In letzterem Fall werden als Detektor 6 vorzugsweise eine oder mehrere Photomultiplier-Röhren (PMT) verwendet. Die Filtereinrichtung 8 ist auch bei dieser Ausführung zwischen Phosphorschicht 1 und Detektor 6 angeordnet, um das von der Phosphorschicht 1 ausgehende Licht 4 vor dessen Erfassung durch den Detektor 6 entsprechend zu filtern. Als lichtleitende oder fokussierende Optik 5 können beispielsweise Lichtleitfasern eingesetzt werden, welche das von den unterschiedlichen Stellen der Phosphorschicht 1 ausgehende Licht 4 zum Detektor 6 hin führen.

In einer Ausführungsform der Vorrichtung umfasst die Filtereinrichtung 8 mindestens zwei unterschiedliche Filterelemente, wobei mindestens ein erstes der Filterelemente im ersten Wellenlängenbereich des Emissionslichts 4 durchlässig und im zweiten Wellenlängenbereich des Anregungslichts 3 undurchlässig ist und mindestens ein zweites der Filterelemente im ersten Wellenlängenbereich des Emissionslichts 4 durchlässig und im dritten Wellenlängenbereich oberhalb des zweiten Wellenlängenbereichs des Anregungslichts 3 undurchlässig ist. Hierdurch wird ein höherer Kontrast, d.h. eine höhere Durchlässigkeit für Emissionslicht 4 im Verhältnis zur Durchlässigkeit für Anregungslicht 3 einschließlich Lichtanteilen mit höheren Wellenlängen, erreicht als dies im Allgemeinen bei Filtereinrichtungen aus nur einem Filterelement der Fall ist.

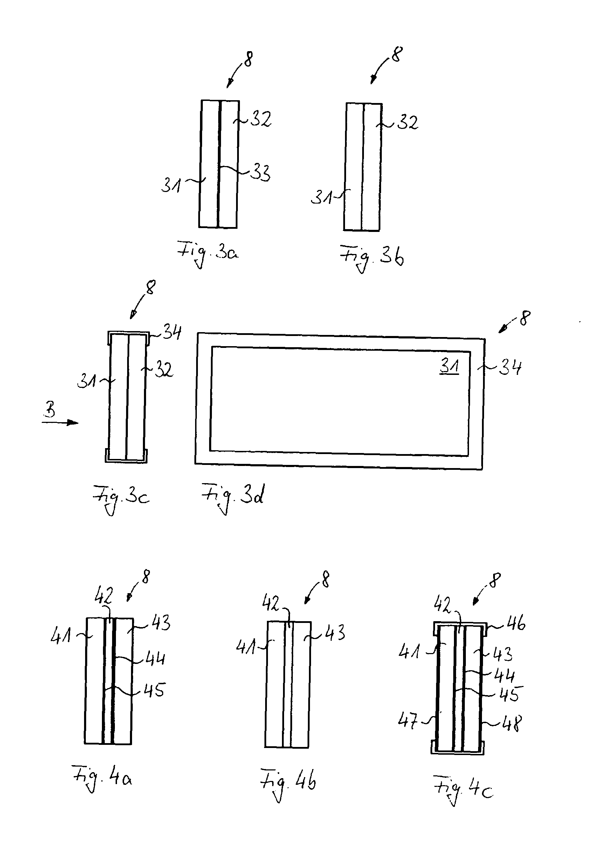

Figur 2 zeigt Beispiele für den spektralen Transmissionsgrad einer Filtereinrichtung 8 sowie einzelner Filterelemente. In dem Diagramm ist der jeweilige Transmissionsgrad T in Abhängigkeit von der Wellenlänge λ dargestellt. Die Transmissionskurve 21 des ersten Filterelements zeigt im ersten Wellenlängenbereich W1 des Emissionslichts eine sehr hohe Durchlässigkeit und im zweiten Wellenlängenbereich W2 des Anregungslichts eine sehr niedrige Durchlässigkeit, die jedoch zu höheren Wellenlängen hin wieder ansteigt. Die Transmissionskurve 22 des zweiten Filterelements zeigt im ersten Wellenlängenbereich W1 ebenfalls eine sehr hohe Durchlässigkeit, welche erst in einem dritten Wellenlängenbereich W3, welcher bei größeren Wellenlängen liegt als der zweite Wellenlängenbereich W2 des Anregungslichts, auf sehr niedrige Werte abfällt.

Wie dem Diagramm zu entnehmen ist, liegt der erste Wellenlängenbereich W1 des Emissionslichts vorzugsweise bei kürzeren Wellenlängen als der zweite Wellenlängenbereich W2 des Anregungslichts.

Der erste Wellenlängenbereich W1 liegt vorzugsweise zwischen etwa 380 nm und 420 nm, da in diesem Bereich bei den meisten Arten von Phosphorschichten der größte Anteil des Emissionslichts emittiert wird. Der zweite Wellenlängenbereich W2 liegt zwischen 520 nm und 700 nm, insbesondere zwischen 630 nm und 690 nm. Bei der Verwendung von Laserdioden als Lichtquelle liegt der weitaus größte Anteil des abgegebenen Anregungslichts in einem schmalen Wellenlängenbereich um die Laserwellenlänge, vorzugsweise 660 nm. Der Transmissionsgrad T im zweiten Wellenlängenbereich W2 des Anregungslichts liegt vorzugsweise unter 10⁻⁸, damit das Anregungslicht, welches eine meist um mehrere Größenordnungen höhere Intensität im Verhältnis zu dem zu erfassenden Emissionslicht aufweist, besonders zuverlässig abgeschwächt wird.

Für die ersten und zweiten Filterelemente sind beispielsweise Absorptionsfilter der Firma SCHOTT GLAS, D-55122 Mainz, Germany, mit der Produktbezeichnung BG 3, BG 4 und BG 12 bzw. BG 18, BG 39 und BG 42 geeignet.

Durch Kombination des ersten und des zweiten Filterelements in der Filtereinrichtung wird schließlich die Transmissionskurve 20 der Filtereinrichtung erhalten, welche hohe Transmissionsgrade im ersten Wellenlängenbereich W1 aufweist und sowohl für Licht im Wellenlängenbereich W2 des Anregungslichts als auch im dritten Wellenlängenbereich W3 oberhalb des Wellenlängenbereichs W2 undurchlässig ist.

Die Filterelemente sind vorzugsweise als Absorptionsfilter ausgebildet, welche das Licht im zweiten Wellenlängenbereich W2 des Anregungslichts bzw. im dritten Wellenlängenbereich W3 absorbieren. Als Absorptionsfilter werden optische Filter aus Glas oder Kunststoff mit lichtabsorbierenden ionischen und/oder anorganischen Verbindungen verwendet.

Durch die Kombination von mindestens zwei als Absorptionsfilter ausgebildeten Filterelementen mit jeweils unterschiedlichem spektralen Absorptionsverhalten lassen sich besonders hohe Kontraste des durchgelassenen Emissionslichts im ersten Wellenlängenbereich W1 im Verhältnis zu den im zweiten und dritten Wellenlängenbereich W2 und W3 durchgelassenen Lichtanteilen erzielen.

Zur weiteren Kontrasterhöhung kann mindestens eines der Filterelemente mit einer ersten Reflexionsschicht versehen sein, welche Licht in einem vierten Wellenlängenbereich W4 größtenteils reflektiert und dadurch für Licht in diesem Wellenlängenbereich im Wesentlichen undurchlässig ist. Der vierte Wellenlängenbereich W4 liegt bei größeren Wellenlängen als der zweite Wellenlängenbereich W2, überlappt insbesondere mit diesem und liegt vorzugsweise zwischen etwa 650 nm und 780 nm. Auf die explizite Darstellung der Transmissionskurve der ersten Reflexionsschicht wurde aus Gründen der besseren Übersichtlichkeit verzichtet. Durch die erste Reflexionsschicht kann die Durchlässigkeit der Filtereinrichtung zusätzlich in einem weiteren Wellenlängenbereich herabgesetzt werden, um auch dort ausreichend geringe Transmissionsgrade T zu erreichen. Im dargestellten Beispiel ist dies der zwischen den Wellenlängenbereichen W2 und W3 liegende Wellenlängenbereich.

Zusätzlich oder alternativ zur ersten Reflexionsschicht kann mindestens eines der Filterelemente eine zweite Reflexionsschicht aufweisen, welche Licht in einem fünften Wellenlängenbereich W5 größtenteils reflektiert und dadurch für Licht in diesem Wellenlängenbereich im Wesentlichen undurchlässig ist. Der fünfte Wellenlängenbereich liegt bei größeren Wellenlängen als der zweite Wellenlängenbereich W2 des Anregungslichts und überlappt insbesondere mit dem dritten und/oder vierten Wellenlängenbereich W3 bzw. W4 zumindest teilweise. Vorzugsweise liegt der fünfte Wellenlängenbereich W5 zwischen etwa 750 nm und 910 nm. Auch die zweite Reflexionsschicht führt zu einer zusätzlichen Verminderung der Durchlässigkeit der Filtereinrichtung in einem Wellenlängenbereich zwischen dem zweiten Wellenlängenbereich und dritten Wellenlängenbereich W2 und W3. Auch hier wurde die explizite Darstellung der Transmissionskurve der zweiten Reflexionsschicht aus Gründen der Übersichtlichkeit weggelassen.

Bei den vorzugsweise verwendeten Reflexionsschichten handelt es sich um Schichtsysteme aus mehreren dünnen dielektrischen Schichten mit jeweils unterschiedlichen Brechungsindizes und Dicken. Das auf ein solches Schichtsystem treffende Licht wird aufgrund von Interferenzeffekten je nach Einfallswinkel und Wellenlänge reflektiert oder transmittiert.

Vorzugsweise wird die Lage des dritten Wellenlängenbereich W3 so gewählt, daß dieser unmittelbar an den zweiten Wellenlängenbereich W2 des Anregungslichts angrenzt. Die Filtereinrichtung ist dann für Lichtanteile in einem sehr breiten Wellenlängenbereich vom zweiten Wellenlängenbereich W2 bis einschließlich zum unmittelbar angrenzenden dritten Wellenlängenbereich W3 undurchlässig. Dies ist in Anwendungsfällen von besonderem Vorteil, bei denen in der Phosphorschicht längerwellige Fluoreszenzstrahlung angeregt wird, welche die Erfassung des bei niedrigeren Wellenlängen emittierten Emissionslichts beeinflussen würde.

Ein Angrenzen des dritten Wellenlängenbereich W3 an den zweiten Wellenlängenbereich W2 wird beispielsweise durch eine geeignete Wahl und Kombination von ersten und zweiten Filterelementen mit entsprechenden Transmissionskurven 21 bzw. 22 erreicht. Falls dieses alleine durch Kombination von Filterelementen nicht erreicht wird, kann die Filtereinrichtung zusätzlich mit einer oder mehreren der oben beschriebenen ersten und/oder zweiten Reflexionsschichten versehen werden.

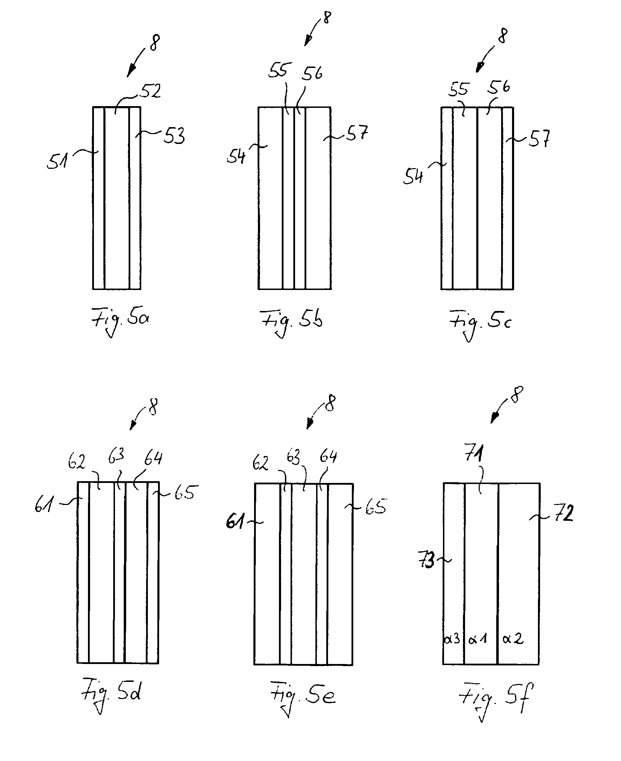

Figur 3 zeigt nicht erfindungsgemäße Vergleichsbeispiele einer aus zwei Filterelementen zusammengesetzten Filtereinrichtung.

Bei dem in Figur 3 a im Querschnitt dargestellten Beispiel einer Filtereinrichtung 8 sind ein erstes Filterelement 31 und ein zweites Filterelement 32 durch eine Schicht 33 aus Klebstoff oder Kitt mit einer hohen Durchlässigkeit im ersten Wellenlängenbereich W1 des Emissionslichts miteinander verklebt. Vorzugsweise weist das Material der Schicht 33 eine niedrige Durchlässigkeit für Licht im zweiten und/oder dritten Wellenlängenbereich W2 bzw. W3 auf. Durch die Schicht 33 aus Klebstoff bzw. Kitt werden - im Vergleich zu einer Schicht aus Luft- Reflexionsverluste aufgrund geringerer Unterschiede der Brechungsindizes an den Grenzflächen der Filterelemente 31 und 32 zur Schicht 33 vermindert, so daß eine hohe Durchlässigkeit im ersten Wellenlängenbereich W1 des Emissionslichts gewährleistet ist.

In einer alternativen Ausgestaltung in Figur 3 b sind die beiden Filterelemente 31 und 32 der Filtereinrichtung 8 durch Ansprengen miteinander verbunden. Hierzu werden die Oberflächen der Filterelemente 31 und 32 glatt poliert, so dass diese bei Kontakt miteinander aufgrund atomarer oder molekularer Kohäsionskräfte zusammen gehalten werden. Bei dieser einfachen Verbindungstechnik wird das gesamte Transmissionsverhalten der Filtereinrichtung 8 nicht durch zusätzliche Kitt-oder Kleberschichten beeinflusst.

In Figur 3 c ist ein weiteres Ausführungsbeispiel einer Filtereinrichtung 8 im Querschnitt dargestellt, bei welcher die Filterelemente durch einen im Randbereich der beiden Filterelemente 31 und 32 verlaufenden Rahmen 34 zusammen gehalten werden. Figur 3 d zeigt eine Aufsicht auf eine derartige Filtereinrichtung 8 in Blickrichtung B. Wie zu erkennen ist, verläuft der hier dargestellte Rahmen 34 entlang des gesamten Randbereichs der beiden Filterelemente 31 und 32. Je nach Anwendungsfall kann es ausreichend sein, wenn ein entsprechender Rahmen 34 lediglich in bestimmten Abschnitten des Randbereichs verläuft, beispielsweise im Bereich von einzelnen Ecken der Filtereinrichtung 8. In Form eines solchen Rahmens wird ein besonders robuster Zusammenhalt der einzelnen Filterelemente 31 und 32 gewährleistet.

Im Hinblick auf die bevorzugten optischen Eigenschaften der ersten und zweiten Filterelemente 31 bzw. 32 gelten die Ausführungen im Zusammenhang mit den Figuren 1 und 2 entsprechend.

Die Figur 4 zeigt unterschiedliche Ausführungsbeispiele einer aus drei Filterelementen zusammengesetzten Filtereinrichtung jeweils im Querschnitt.

Im Beispiel der Figur 4 a ist zwischen zwei ersten Filterelementen 41 und 43 ein zweites Filterelement 42 angeordnet und mittels Schichten 44 und 45 aus Klebstoff oder Kitt mit diesen verklebt bzw. verkittet. Um eine möglichst geringe Abschwächung des zu transmittierenden Emissionslichts zu gewährleisten, weisen die Schichten 44 und 45 eine hohe Durchlässigkeit für Licht im ersten Wellenlängenbereich W1 des Emissionslichts auf. Vorzugsweise weist das Material der Schicht 44 und/oder 45 außerdem eine niedrige Durchlässigkeit für Licht im zweiten und/oder dritten Wellenlängenbereich W2 bzw. W3 auf. Wie bereits im Zusammenhang mit dem Ausführungsbeispiel der Figur 3 a eingehend erläutert wurde, werden durch die Schichten 44 und 45 Reflexionsverluste an den Grenzflächen zwischen den ersten und zweiten Filterelementen 41 und 43 bzw. 42 und den Schichten 44 bzw. 45 vermindert, so daß auch in diesem Fall eine hohe Durchlässigkeit des Filterelements 8 im ersten Wellenlängenbereich W1 des Emissionslichts gewährleistet ist.

Die beiden ersten Filterelemente 41 und 43 sind vorzugsweise im ersten Wellenlängenbereich W1 des Emissionslichts durchlässig und im zweiten Wellenlängenbereich W2 des Anregungslichts undurchlässig. Das zwischen diesen beiden Filterelementen liegende zweite Filterelement 42 ist ebenfalls im ersten Wellenlängenbereich W1 des Emissionslichts durchlässig und dritten Wellenlängenbereich W3, welcher bei größeren Wellenlängen liegt als der zweite Wellenlängenbereich W2, undurchlässig.

Durch eine solche Kombination von als Absorptionsfilter ausgebildeten Filterelementen mit jeweils unterschiedlichem spektralem Absorptionsverhalten werden die bereits im Zusammenhang mit den Ausführungsbeispielen der Figuren 1 und 2 genannten Vorteile erzielt.

Absorptionsfilter mit unterschiedlichem spektralen Absorptionsverhalten weisen im Allgemeinen unterschiedliche thermische Ausdehnungskoeffizienten auf. In solchen Fällen würde eine Verbindung von zwei oder mehreren unterschiedlichen Filterelementen dazu führen, dass sich die ganze Filtereinrichtung aufgrund der unterschiedlichen thermischen Ausdehnung der Filterelemente bei Temperaturschwankungen verbiegen würde. Dieser bei Bimetallen ausgenutzte Effekt würde bei den hier vorliegenden optischen Anwendungen zu unerwünschten Effekten führen, wie z.B. einem veränderten Absorptionsverhalten aufgrund von Spannungen in den Filterelementen, erhöhten Reflexionsverlusten an den Oberflächen der Filterelemente und Verspannungen in den mit der Filtereinrichtung verbundenen Komponenten der Vorrichtung. Letzteres ist insbesondere bei einer mit einem Detektor verbundenen Filtereinrichtung von Nachteil, da bei einer Verbiegung der Filtereinrichtung entweder der Detektor verbogen wird oder dieser zumindest hohen Spannungen ausgesetzt ist, was dessen Empfindlichkeit und folglich die Zuverlässigkeit beim Erfassen des Emissionslichts herabsetzen kann.

Aus diesem Grund sind bei dem in der Figur 4 a gezeigten Ausführungsbeispiel die beiden ersten Filterelemente 41 und 43 mit jeweils einem ersten thermischen Ausdehnungskoeffizienten und das zweite Filterelement 42 mit einem zweiten thermischen Ausdehnungskoeffizienten derart angeordnet, dass zwei Filterelement-Paare 41/42 und 42/43 mit unterschiedlichen thermischen Ausdehnungskoeffizienten erhalten werden und Biegekräfte, welche bei Temperaturänderungen in den einzelnen Filterelement-Paaren 41/42 und 42/43 auftreten, gegeneinander wirken und sich insbesondere gegenseitig aufheben. Hierdurch wird eine Verbiegung der Filtereinrichtung 8 aufgrund der unterschiedlichen thermischen Ausdehnung der ersten Filterelemente 41 und 43 einerseits und des zweiten Filterelements 42 andererseits verhindert.

In der hier gezeigten symmetrischen Abfolge der Filterelemente 41, 42 und 43 mit unterschiedlichen thermischen Ausdehnungskoeffizienten und Dicke wird erreicht, dass sich etwaige auftretende Bimetall-Effekte der jeweiligen Filterelement-Paare 41/42 bzw. 43/42 auf besonders zuverlässige Weise kompensieren.

Die in Figur 4 b gezeigte Filtereinrichtung 8 ist wie die in Figur 4 a gezeigte aufgebaut, wobei die einzelnen Filterelemente 41, 42 und 43 nicht durch zusätzliche Schichten 44 und 45, sondern durch Ansprengen miteinander verbunden sind. Im übrigen gelten für diese Filtereinrichtung 8 dieselben Ausführungen wie zu dem in Figur 4 a gezeigten Beispiel.

Die in Figur 4 c dargestellte Filtereinrichtung 8 entspricht in ihrem Aufbau ebenfalls im Wesentlichen der in Figur 4 a gezeigten Filtereinrichtung; die Ausführungen zu Figur 4 a gelten entsprechend. Zusätzlich zu den Schichten 44 und 45 sorgt ein im Bereich der Filterelemente 41, 42 und 43 verlaufender Rahmen 46 für einen erhöhten mechanischen Zusammenhalt der einzelnen Filterelemente 41, 42 und 43. Wie bereits im Zusammenhang mit dem in den Figuren 3 c und 3 d gezeigten Ausführungsbeispiel näher erläutert wurde, kann der Rahmen 46 lediglich in einzelnen Teilabschnitten des Randbereichs der Filterelemente 41, 42 und 43, vorzugsweise im Bereich einzelner Ecken, vorgesehen sein.
Zusätzlich zu dem in Figur 4 a gezeigten Filteraufbau weist die Filtereinrichtung 8 der Fig. 4 c eine erste Reflexionsschicht 47 auf, an welcher Licht in einem vierten Wellenlängenbereich W4 größtenteils reflektiert wird, welcher oberhalb des zweiten Wellenlängenbereichs W2 des Anregungslichts liegt und insbesondere mit dem zweiten Wellenlängenbereich W2 teilweise überlappt. Diese erste Reflexionsschicht 47 ist in dem gezeigten Beispiel auf der Außenseite eines der beiden ersten Filterelemente 41 aufgebracht.

Auf der Außenseite des anderen der beiden ersten Filterelemente 43 ist eine zweite Reflexionsschicht 48 aufgebracht, an welcher Licht in einem fünften Wellenlängenbereich W5 größtenteils reflektiert wird, welcher oberhalb des zweiten Wellenlängenbereichs W2 des Anregungslichts liegt und insbesondere mit dem dritten und/oder vierten Wellenlängenbereich W3 bzw. W4 teilweise überlappt.

Wie bereits im Zusammenhang mit der Figur 2 erläutert wurde, kann durch eine oder mehrere zusätzliche Reflexionsschichten 47 bzw. 48 auf den Absorptionsfiltern 41 bis 43 ein besonders hohes Kontrastverhältnis von durchgelassenem Emissionslicht zu durchgelassenen Lichtanteilen in anderen Wellenlängenbereichen erzielt werden.

Es ist bevorzugt, die Filtereinrichtung 8 in der Weise zwischen Phosphorschicht 1 und Detektor 6 anzuordnen, dass das von der Phosphorschicht 1 ausgehende Licht, welches zunächst neben dem zu erfassenden Emissionslicht 4 noch andere Lichtanteile enthält, zunächst an der zweiten Reflexionsschicht 48 reflektiert wird, bevor es die nachfolgend angeordneten und als Absorptionsfilter ausgebildeten Filterelemente 43, 42 und 41 in der genannten Reihenfolge durchläuft. Hierdurch wird eine Erwärmung der einzelnen Filterelemente, insbesondere des zweiten Filterelements 42, infolge einer Absorption langwelliger, insbesondere infraroter, Strahlungsanteile stark herabgesetzt. Thermische Ausdehnungseffekte werden hierdurch zusätzlich vermindert.

Die Figuren 5 a bis 5 f zeigen Ausführungsbeispiele von aus drei bis fünf Filterelementen zusammengesetzten Filtereinrichtungen.
Die in Figur 5 a gezeigte Filtereinrichtung 8 entspricht in ihrem prinzipiellen Aufbau der in Figur 4 b gezeigten, wobei ein zweites Filterelement 52 mit einem zweiten thermischen Ausdehnungskoeffizienten zwischen zwei ersten Filterelementen 51 und 53 mit jeweils einem ersten thermischen Ausdehnungskoeffizienten angeordnet ist. Im Unterschied zu der in Figur 4 b gezeigten Filtereinrichtung weist hierbei das zweite Filterelement 52 eine größere Dicke auf als die beiden ersten Filterelemente 51 und 53. Auch bei diesen Dickenverhältnissen ist gewährleistet, dass sich in den jeweiligen Filterelement-Paaren 51/52 bzw. 52/55 auftretende Biegekräfte gegenseitig aufheben, wodurch eine Verbiegung der Filtereinrichtung 8 vermieden wird.

Figur 5 b zeigt eine Filtereinrichtung 8, welche aus vier Filterelementen 54 bis 57 zusammengesetzt ist. Die beiden ersten Filterelemente 54 und 57 weisen hierbei einen ersten thermischen Ausdehnungskoeffizienten auf, die beiden zweiten Filterelemente 55 und 56 weisen einen zweiten thermischen Ausdehnungskoeffizienten auf. Durch die symmetrische Abfolge der einzelnen Filterelemente 54 bis 57 mit jeweils unterschiedlichen Ausdehnungskoeffizienten wird ebenfalls eine Verbiegung der Filtereinrichtung 8 vermieden, da sich die in den einzelnen Filterelement-Paaren 54/55 und 56/57 auftretenden Biegekräfte gerade aufheben.

Für die in Figur 5 c dargestellte Filtereinrichtung 8 gelten die Ausführungen zu dem in Figur 5 b dargestellten Beispiel entsprechend, wobei lediglich die Dicken der ersten und zweiten Filterelemente 55 und 56 bzw. 54 und 57 in umgekehrtem Verhältnis zueinander stehen.

Für eine besonders zuverlässige Kompensation etwaiger Biegekräfte ist es erforderlich, dass die Dicken der ersten Filterelemente 54 und 57 in derselben Größenordnung liegen, insbesondere gleich sind, und die Dicken der zweiten Filterelemente 55 und 56 in derselben Größenordnung liegen, insbesondere gleich sind.

Figur 5 d zeigt ein weiteres Ausführungsbeispiel einer Filtereinrichtung 8, welche aus fünf Filterelementen 61 bis 65 zusammengesetzt ist. Die beiden ersten Filterelemente 61 und 65 weisen einen ersten Ausdehnungskoeffizienten, die beiden zweiten Filterelemente 62 und 64 weisen einen zweiten Ausdehnungskoeffizienten, und das dritte Filterelement 63 weist einen dritten Ausdehnungskoeffizienten auf. Auch in diesem Beispiel sind die einzelnen Filterelemente 61 und 65, 62 und 64 sowie 63 mit jeweils unterschiedlichen thermischen Ausdehnungskoeffizienten derart in symmetrischer Abfolge angeordnet, dass sich etwaige Biegekräfte in den Filterelemente-Paaren 61/62, 62/63, 63/64 und 64/65 kompensieren, wodurch eine thermisch bedingte Verbiegung der Filtereinrichtung 8 verhindert wird.

Die ersten und zweiten Filterelemente 61 und 65 bzw. 62 und 64 sind in diesem Beispiel symmetrisch um das dritte Filterelement 63 angeordnet. Außerdem weist das dritte Filterelement 63 einen dritten thermischen Ausdehnungskoeffizienten auf, welcher von dem ersten und zweiten Ausdehnungskoeffizienten der ersten und zweiten Filterelemente 61 und 65 bzw. 62 und 64 verschieden ist. Alternativ kann das dritte Filterelement aber auch einen thermischen Ausdehnungskoeffizienten haben, welcher mit dem ersten oder zweiten thermischen Ausdehnungskoeffizienten der ersten und zweiten Filterelemente 61 und 65 bzw. 62 und 64 identisch ist. Die Kompensation der Biegekräfte ist auch bei dieser alternativen Ausgestaltung weiter gewährleistet.

Für die in Figur 5 e gezeigte Filtereinrichtung 8 gelten die Ausführungen zu dem in Figur 5 d gezeigten Beispiel entsprechend, wobei in Abwandlung desselben umgekehrte Verhältnisse in den Dicken der ersten, zweiten und dritten Filterelemente 61 und 65 bzw. 63 und 64 bzw. 63 gewählt wurden. Wie bereits vorstehend ausgeführt, wird auch in diesem Fall eine besonders zuverlässige Kompensation von Biegekräften erreicht, wenn die Dicken der ersten und/oder zweiten Filterelemente 61 und 65 bzw. 62 und 64 jeweils in derselben Größenordnung liegen, insbesondere wenn diese Dicken gleich sind.

Figur 5 f zeigt ein weiteres Ausführungsbeispiel für eine Filtereinrichtung aus einem ersten Filterelement 71 mit einem ersten thermischen Ausdehnungskoeffizienten α1, einem zweiten Filterelement 72 mit einem zweiten thermischen Ausdehnungskoeffizienten α2 und einem dritten Filterelement 73 mit einem dritten thermischen Ausdehnungskoeffizienten α3, wobei der erste Ausdehnungskoeffizient α1 kleiner ist als der zweite Ausdehungskoeffizient α2 und der zweite Ausdehungskoeffizient kleiner ist als der dritte Ausdehnungskoeffizient α3: α1 < α2 < α3. Die Abfolge der einzelnen Filterelemente ist so gewählt, daß Biegekräfte in den einzelnen Filterelemente-Paaren 71/72, und 71/73 gegeneinander wirken und sich insbesondere gegenseitig aufheben. Wie der vorliegende Fall zeigt, ist hierbei die Abfolge der thermischen Ausdehnungskoeffizienten α3, α1 und α2 der einzelnen Filterelemente 73, 71 und 72 nicht symmetrisch. Auch die Abfolge der Dicken der einzelnen Filterelemente 73, 71 und 72 muß nicht symmetrisch sein. Für eine ausreichende Kompensation der Biegekräfte ist es ausreichend, wenn die Dicken der einzelnen Filterelemente 73, 71 und 72 in derselben Größenordnung liegen.

In den Beispielen der Figuren 5 a bis 5 f wurde auf die explizite Darstellung von Schichten mit Kleber bzw. Kitt und Rahmen aus Gründen der Anschaulichkeit verzichtet. Generell können die einzelnen Filterelemente in diesen Beispielen durch jede der oben näher beschriebenen Möglichkeiten der Verbindung, wie z. B. Kleben, Verkitten, Ansprengen und/oder mittels eines Rahmens, miteinander verbunden werden.

## Patentansprüche

1. Vorrichtung zum Erfassen von in einer Phosphorschicht enthaltenen Informationen mit
- einer Lichtquelle (2) zur Bestrahlung der Phosphorschicht (1) mit Anregungslicht (3), welches zur Anregung von Emissionslicht (4) in der Phosphorschicht (1) geeignet ist,
- einem Detektor (6) zum Erfassen von in der Phosphorschicht (1) angeregtem Emissionslicht (4) und
- einer Filtereinrichtung (8), welche zwischen der Phosphorschicht (1) und dem Detektor (6) oder zwischen der Phosphorschicht (1) und der Lichtquelle (2) angeordnet ist,
**dadurch gekennzeichnet, dass**
die Filtereinrichtung (8) mindestens drei als Absorptionsfilter ausgebildete und miteinander verbundene Filterelemente (41 - 43; 51 - 57; 61 - 65; 71 - 73) aufweist, welche vom Emissions- bzw. Anregungslicht (4 bzw. 3) der Reihe nach durchlaufen werden, wobei mindestens zwei der miteinander verbundenen Filterelemente (41 - 43; 51 - 57; 61 - 65; 71 - 73) unterschiedliche thermische Ausdehnungskoeffizienten aufweisen und die Filterelemente (41 - 43; 51 - 57; 61 - 65) derart hintereinander angeordnet sind, dass die Abfolge der thermischen Ausdehnungskoeffizienten der Filterelemente (41 - 43; 51 - 57; 61 - 65) symmetrisch ist, und wobei die miteinander verbundenen Filterelemente (41 - 43; 51 - 57; 61 - 65; 71 - 73) derart angeordnet sind, dass
- mindestens zwei Filterelement-Paare (41/42 und 42/43; 51/52 und 52/53; 54/55 und 56/57; 61/62 und 62/63 und 63/64 und 64/65; 71/72 und 71/73) aus jeweils zwei Filterelementen (41 und 42; 42 und 43; 51 und 52; 52 und 53; 54 und 55; 56 und 57; 61 und 62; 62 und 63; 63 und 64; 64 und 65; 71 und 72; 71 und 73) mit unterschiedlichen thermischen Ausdehnungskoeffizienten erhalten werden und
- Biegekräfte, welche bei Temperaturänderungen in den einzelnen Filterelement-Paaren (41/42 und 42/43; 51/52 und 52/53; 54/55 und 56/57; 61/62 und 62/63 und 63/64 und 64/65; 71/72 und 71/73) auftreten, gegeneinander wirken und sich insbesondere gegenseitig aufheben.

2. Vorrichtung nach Anspruch 1, **dadurch gekennzeichnet, dass** mindestens zwei der Filterelemente (41 - 43; 51 - 57; 61 - 65; 71 - 73) durch Kleben miteinander verbunden sind.

3. Vorrichtung nach Anspruch 1, **dadurch gekennzeichnet, dass** mindestens zwei der Filterelemente (41 - 43; 51 - 57; 61 - 65; 71 - 73) durch Ansprengen miteinander verbunden sind.

4. Vorrichtung nach einem der vorangehenden Ansprüche, **dadurch gekennzeichnet, dass** mindestens zwei der Filterelemente (41 - 43; 51 - 57; 61 - 65; 71 - 73) durch eine Halteeinrichtung zusammengehalten werden.

5. Vorrichtung nach Anspruch 4, **dadurch gekennzeichnet, dass** die Halteeinrichtung als ein im Randbereich der Filterelemente (41 - 43; 51 - 57; 61 - 65; 71 - 73) verlaufender Rahmen (46) ausgebildet ist.

6. Vorrichtung nach einem der vorangehenden Ansprüche, **dadurch gekennzeichnet, dass** die Filtereinrichtung (8) am Detektor (6) angebracht ist.

7. Vorrichtung nach einem der vorangehenden Ansprüche, **dadurch gekennzeichnet, dass** die Filterelemente (41 - 43; 51 - 57; 61 - 65) derart hintereinander angeordnet sind, daß die Abfolge der Dicken der Filterelemente (41 - 43; 51 - 57; 61 - 65) symmetrisch ist.

8. Vorrichtung nach einem der vorangehenden Ansprüche, **dadurch gekennzeichnet, dass** zwischen mindestens zwei ersten Filterelementen (41 und 43; 51 und 53; 54 und 57; 61 und 65;) mit jeweils einem ersten thermischen Ausdehnungskoeffizienten mindestens ein zweites Filterelement (42; 52; 55, 56; 62, 64) mit einem zweiten thermischen Ausdehnungskoeffizienten angeordnet ist, wobei der erste und zweite thermische Ausdehnungskoeffizient unterschiedlich sind.

9. Vorrichtung nach Anspruch 8, **dadurch gekennzeichnet, dass** die Dicken der ersten Filterelemente (41, 43; 51, 53; 54, 57; 61, 65) in derselben Größenordnung liegen, insbesondere gleich sind.

10. Vorrichtung nach einem der Ansprüche 8 bis 9, **dadurch gekennzeichnet, dass** die Dicken der zweiten Filterelemente (42; 52; 55, 56; 62, 64) in derselben Größenordnung liegen, insbesondere gleich sind.

11. Vorrichtung nach einem der vorhergehenden Ansprüche, **dadurch gekennzeichnet, dass** die Filtereinrichtung (8) in einem ersten Wellenlängenbereich (W1) des Emissionslichts (4) durchlässig und in einem zweiten Wellenlängenbereich (W2) des Anregungslichts (3) undurchlässig ist.

12. Vorrichtung nach Anspruch 11, **dadurch gekennzeichnet, dass** die Filtereinrichtung (8) in mindestens einem dritten Wellenlängenbereich (W3) undurchlässig ist, welcher bei größeren Wellenlängen liegt als der zweite Wellenlängenbereich (W2) des Anregungslichts (3).

## Claims

1. A device for reading information contained in a phosphor layer, said device comprising:
(a) a light source (2) for irradiating the phosphor layer with stimulation light (3) that is suitable for stimulating emission light (4) in the phosphor layer;
(b) a detector (6) for detecting emission light (4) that has been stimulated in the phosphor layer; and
(c) a filter device (8) that is arranged between the phosphor layer (1) and the detector (6) or between the phosphor layer (1) and the light source (2),
**characterised in that**
said filter device (8) exhibits at least three filter elements (41 - 43; 51 - 57; 61 - 65; 71 - 73) designed as absorption filters and joined to each other, the emission light (4) and the stimulation light (3) respectively in the order given passing through said filter elements,
at least two of the filter elements (41 - 43; 51 - 57; 61 - 65; 71 - 73) joined to each other exhibiting different thermal expansion coefficients and said filter elements (41 - 43; 51 - 57; 61 - 65) being arranged one after the other in such a way that the sequence of the thermal expansion coefficients of the filter elements (41 - 43; 51 - 57; 61 - 65) is symmetrical and said filter elements (41 - 43; 51 - 57;
61 - 65; 71 - 73) joined to each other being arranged in such a way that
- at least two pairs of filter elements (41/42 and 42/43; 51/52 and 52/53; 54/55 and 56/57; 61/62 and 62/63 and 63/64 and 64/65; 71/72 and 71/73) are obtained from two filter elements each (41 and 42; 42 and 43; 51 and 52; 52 and 53; 54 and 55; 56 and 57; 61 and 62; 62 and 63; 63 and 64; 64 and 65; 71 and 72; 71 and 73) having different thermal expansion coefficients and
- bending forces occurring upon changes in temperature in the individual pairs of filter elements (41/42 and 42/43; 51/52 and 52/53; 54/55 and 56/57; 61/62 and 62/63 and 63/64 and 64/65; 71/72 and 71/73) are counteracting and particularly cancel each other out.

2. The device according to claim 1, wherein at least two of the filter elements (41 - 43; 51 - 57; 61 - 65; 71 - 73) are joined to each other by gluing.

3. The device according to claim 1, wherein at least two of the filter elements (41 - 43; 51 - 57; 61 - 65; 71 - 73) are joined to each other by wringing.

4. The device according to any of the preceding claims, wherein at least two of the filter elements (41 - 43; 51 - 57; 61 - 65; 71 - 73) are held together by a holding device.

5. The device according to claim 4, wherein the holding device is shaped as a frame (46) running along the edge area of the filter elements (41 - 43; 51 - 57; 61 - 65; 71 - 73).

6. The device according to any of the preceding claims, wherein the filter device (8) is mounted on the detector (6).

7. The device according to any of the preceding claims, wherein the filter elements (41 - 43; 51 - 57; 61 - 65) are arranged one after another in such a way that the sequence of the thicknesses of the filter elements (41 - 43; 51 - 57; 61 - 65) is symmetrical.

8. The device according to any of the preceding claims, wherein between at least two first filter elements (41 and 43; 51 and 53; 54 and 57; 61 and 65;) each having a first thermal expansion coefficient there is arranged at least one second filter element (42; 52; 55, 56; 62, 64) having a second thermal expansion coefficient, the first and the second thermal expansion coefficients being different.

9. The device according to claim 8, wherein the thicknesses of the first filter elements (41, 43; 51, 53; 54, 57; 61, 65) are of the same order of magnitude, particularly are the same.

10. The device according to any of the claims 8 to 9, wherein the thicknesses of the second filter elements (42; 52; 55, 56; 62, 64) are of the same order of magnitude, particularly are the same.

11. The device according to any of the preceding claims, wherein the filter device (8) is transparent in a first wavelength range (W1) of the emission light (4) and non-transparent in a second wavelength range (W2) of the stimulation light (3).

12. The device according to claim 11, wherein the filter device (8) is non-transparent in at least a third wavelength range (W3) located at longer wavelengths than the second wavelength range (W2) of the stimulation light (3).

## Revendications

1. Dispositif destiné à la saisie d'informations contenues dans une couche à base de phosphore, comportant :
- une source lumineuse (2) pour l'émission de lumière de stimulation (3) sur la couche à base de phosphore (1), qui est appropriée pour stimuler de la lumière d'émission (4) dans la couche à base de phosphore (1),
- un détecteur (6) pour détecter de la lumière d'émission (4) stimulée dans la couche à base de phosphore (1), et
- un système de filtrage (8), qui est disposé entre la couche à base de phosphore (1) et le détecteur (6) ou entre la couche à base de phosphore (1) et la source lumineuse (2),
**caractérisé en ce que**
le système de filtrage (8) comporte au moins trois éléments filtrants (41 à 43 ; 51 à 57 ; 61 à 65 ; 71 à 73) agencés sous la forme de filtres d'absorption et reliés entre eux, qui sont traversés les uns après les autres par la lumière d'émission ou la lumière de stimulation (4 ou 3), au moins deux des éléments filtrants (41 à 43 ; 51 à 57 ; 61 à 65 ; 71 à 73) reliés entre eux ayant différents coefficients de dilatation thermique, et les éléments filtrants (41 à 43 ; 51 à 57 ; 61 à 65) étant disposés les uns derrière les autres de telle sorte que la succession des coefficients de dilatation thermique des éléments filtrants (41 à 43 ; 51 à 57 ; 61 à 65) soit symétrique, et les éléments filtrants (41 à 43 ; 51 à 57 ; 61 à 65 ; 71 à 73) reliés entre eux étant disposés de telle sorte que
- soient obtenus au moins deux couples d'éléments filtrants (41/42 et 42/43 ; 51/52 et 52/53 ; 54/55 et 56/57 ; 61/62 et 62/63 et 63/64 et 64/65 ; 71/72 et 71/73) constitués chacun de deux éléments filtrants (41 et 42 ; 42 et 43 ; 51 et 52 ; 52 et 53 ; 54 et 55 ; 56 et 57 ; 61 et 62 ; 62 et 63 ; 63 et 64 ; 64 et 65 ; 71 et 72 ; 71 et 73) ayant différents coefficients de dilatation thermique, et
- des forces de flexion intervenant sous l'effet de variations de température dans les différents couples d'éléments filtrants (41/42 et 42/43 ; 51/52 et 52/53 ; 54/55 et 56/57 ; 61/62 et 62/63 et 63/64 et 64/65 ; 71/72 et 71/73) agissent les unes par rapport aux autres, et se compensent notamment mutuellement.

2. Dispositif selon la revendication 1, **caractérisé en ce qu'**au moins deux des éléments filtrants (41 à 43 ; 51 à 57 ; 61 à 65 ; 71 à 73) sont reliés entre eux par collage.

3. Dispositif selon la revendication 1, **caractérisé en ce qu'**au moins deux des éléments filtrants (41 à 43 ; 51 à 57 ; 61 à 65 ; 71 à 73) sont reliés entre eux par accolage.

4. Dispositif selon l'une des revendications précédentes, **caractérisé en ce qu'**au moins deux des éléments filtrants (41 à 43 ; 51 à 57 ; 61 à 65 ; 71 à 73) sont maintenus ensemble par un dispositif de retenue.

5. Dispositif selon la revendication 4, **caractérisé en ce que** le dispositif de retenue est agencé sous la forme d'un cadre (46) s'étendant dans la zone de bord des éléments filtrants (41 à 43 ; 51 à 57 ; 61 à 65 ; 71 à 73).

6. Dispositif selon l'une des revendications précédentes, **caractérisé en ce que** le système de filtrage (8) est fixé sur le détecteur (6).

7. Dispositif selon l'une des revendications précédentes, **caractérisé en ce que** les éléments filtrants (41 à 43 ; 51 à 57 ; 61 à 65) sont disposés les uns derrière les autres de telle sorte que la succession des épaisseurs des éléments filtrants (41 à 43 ; 51 à 57 ; 61 à 65) soit symétrique.

8. Dispositif selon l'une des revendications précédentes, **caractérisé en ce qu'**au moins un deuxième élément filtrant (42 ; 52 ; 55, 56 ; 62, 64) ayant un deuxième coefficient de dilatation thermique est disposé entre au moins deux premiers éléments filtrants (41 et 43 ; 51 et 53 ; 54 et 57 ; 61 et 65) ayant respectivement un premier coefficient de dilatation thermique, le premier et le deuxième coefficient de dilatation thermique étant différents.

9. Dispositif selon la revendication 8, **caractérisé en ce que** les épaisseurs des premiers éléments filtrants (41, 43 ; 51, 53 ; 54, 57 ; 61, 65) se situent dans le même ordre de grandeur, et sont notamment identiques.

10. Dispositif selon l'une des revendications 8 à 9, **caractérisé en ce que** les épaisseurs des deuxièmes éléments filtrants (42 ; 52 ; 55, 56 ; 62, 64) se situent dans le même ordre de grandeur, et sont notamment identiques.

11. Dispositif selon l'une des revendications précédentes, **caractérisé en ce que** le système de filtrage (8) est perméable dans une première plage de longueur d'ondes (W1) de la lumière d'émission (4), et imperméable dans une deuxième plage de longueur d'ondes (W2) de la lumière de stimulation (3).

12. Dispositif selon la revendication 11, **caractérisé en ce que** le système de filtrage (8) est imperméable dans au moins une troisième plage de longueur d'ondes (W3), qui est située à des longueurs d'ondes plus importantes que la deuxième plage de longueur d'ondes (W2) de la lumière de stimulation (3).
